# EUROPEAN PATENT SPECIFICATION

(11) **EP 3 649 368 B1**
(45) Date of publication and mention of the grant of the patent: **03.09.2025**
(21) Application number: 18742565.7
(22) Date of filing: 05.07.2018
(51) Int. Cl.: F16F 13/30, F04D 17/16, F16F 15/023, F16J 15/43, F16F 15/027, F16F 1/32

(54) **DAMPER AND METHOD**
DÄMPFER UND VERFAHREN
AMORTISSEUR ET METHODE

(30) Priority: 07.07.2017 GB 201710926
(43) Date of publication of application: 13.05.2020
(73) Proprietor: Edwards Limited, Burgess Hill, Sussex RH15 9TW (GB)
(72) Inventor: SMITH, Paul David, Burgess Hill Sussex RH15 9TW (GB)
(74) Representative: Norton, Ian Andrew
(86) International application number: PCT/GB2018/051902
(87) International publication number: WO 2019/008369

(56) References cited:
- DE-A1- 10 329 982
- FR-A1- 2 883 616
- US-B2- 6 883 967

## Description

### FIELD OF THE INVENTION

The present invention relates to a damper and method.

### BACKGROUND

Dampers are known. Typically, dampers are used to reduce the amplitude of vibrations being transferred from one component to another. Although various dampers exist, they each have their own shortcomings. Accordingly, it is desired to provide an improved damper. US 6,883,967 B2 discloses a center bearing assembly that rotatably supports an intermediate portion of a vehicle driveshaft assembly during use. The center bearing assembly includes a rigid bracket that is secured to a support surface of the vehicle, a support member that is supported within the rigid bracket, and an annular bearing that is supported within the support member for rotatably supporting the intermediate portion of the vehicle driveshaft assembly. The support member is formed from a resilient material and has a cavity formed therein. A plurality of bladders is disposed within the cavity formed in the support member. Each of the bladders is filled with a quantity of a rheological fluid. Fluid communication between adjacent pairs of the bladders is provided by respective control valves. A control circuit is provided for selectively generating and applying an energy field to each of the control valves so as to vary the ability of the rheological fluid to flow therethrough between the associated pair of bladders. As a result, the vibration dampening characteristics of the support member can be varied.

### SUMMARY

According to a first aspect, there is provided an apparatus as claimed in claim 1.

The first aspect recognises that a problem with existing dampers is that the fluid in the damper channel needs to be retained within the channels in order to provide the required amount of viscous damping. Existing techniques typically use a physical seal to retain the fluid within the damper channel and prevent it from escaping. However, the use of a seal can be difficult in many circumstances, since that seal can be subject to various forms of ageing or other failure modes and can introduce an undesired spring effect which is often non-linear as a function of the excitation frequency.

Accordingly, an apparatus as claimed in claim 1 is provided. In this way, the magnetic fluid may be retained within the damper channel by the magnetic element without the need of any physical or mechanical seal which can age, resulting in failure, and which can introduce an undesired spring effect.

In one embodiment, the magnetic element comprises a permanent magnet operable to retain the magnetic fluid in the damper channel. Accordingly, the magnetic element may be a permanent magnet whose magnetic field holds the magnetic fluid within the damper channel.

In one embodiment, the damper channel is unsealed. Accordingly, the damper channel may be open, vented or exposed to the ambient surroundings.

In one embodiment, the magnetic element comprises at least one electro-magnet operable to displace the magnetic fluid within the damper channel. Accordingly, an electro-magnet may be provided which may be energized to vary its magnetic field to displace or move the magnetic fluid within the damper channel. This provides for an active damper arrangement whose damper response is tuneable by varying the magnetic field.

In one embodiment, the electro-magnet is located axially along the damper channel. Accordingly, the electro-magnet may be positioned along the length of the damper channel in order to enable the magnetic fluid to be displaced to different positions within the damper channel in order to vary the damper response.

In one embodiment, the electro-magnet is located is located towards an end of the damper channel.

In one embodiment, the magnetic element comprises a plurality of electro-magnets each located at a different axial position along the damper channel. Accordingly, more than one electro-magnet may be provided, each located at a different position along the damper channel, in order to provide for more reliable and precise control over the movement of the magnetic fluid within the damper channel.

In one embodiment, the apparatus comprises at least one reservoir in fluid communication with the damper channel and configured as a source of the magnetic fluid. Accordingly, one or more reservoirs may be provided which provide the magnetic fluid to the damper channel.

In one embodiment, the apparatus comprises a pair of the reservoirs, axially opposed and spaced apart by the damper channel. Accordingly, a pair of reservoirs may be provided, one located at either end of the damper channel. This provides a reservoir into which the magnetic fluid can be returned when the electro-magnet is un-energized and which can provide a source of the magnetic fluid irrespective of the orientation of the damper assembly.

The apparatus comprises control logic operable to vary a magnetic field generated by the magnetic element to displace the magnetic fluid to different positions within the damper channel. Accordingly, the control logic may vary the magnetic field generated by the magnetic element in order to move the magnetic fluid to different locations along the damper channel.

In one embodiment, the control logic is operable to vary the magnetic field generated by the magnetic element to displace the magnetic fluid to within the damper channel when the rotatable structure transitions between inactivity and a threshold speed. Accordingly, the control logic may sense when the rotatable structure transitions between idle and a threshold operating speed (both at start-up and at shut-down) and varies the magnetic field to move the magnetic fluid to within the damper channel during such transition. This helps to ensure that maximum damping occurs during periods of maximum vibration.

In one embodiment, the control logic is operable to vary the magnetic field generated by the magnetic element to displace the magnetic fluid out of the damper channel when the rotatable structure exceeds the threshold speed. Accordingly, the magnetic field may be varied or de-energized to remove the magnetic fluid from within the damper channel when the rotatable structure is at its normal operating speed. This helps to reduce the damping experience during normal operation.

In one embodiment, the control logic is operable to vary the magnetic field generated by the magnetic element to displace the magnetic fluid to within the damper channel in advance of the rotatable structure transitioning between inactivity and the threshold speed. Accordingly, the control logic may determine that the rotatable structure is about to transition between idle and operating speed, and so displaces the magnetic fluid into the damper channel in advance of the expected vibrations occurring during this transition.

In one embodiment, the damper comprises a metal or polymer spring damper.

In one embodiment, the damper comprises an axially stiff, radially compliant bearing support spring element.

In one embodiment, the rotatable structure comprises a bearing for a pump.

In one embodiment, the pump comprises a vacuum pump.

In one embodiment, the apparatus comprises the rotatable structure and the pump.

In one embodiment, the permanent magnetic comprises a rotor magnet of the pump.

In one embodiment, the magnetic fluid comprises at least one of a ferrofluid and a magnetic room temperature ionic liquid.

According to a second aspect, there is provided a method as claimed in claim 15.

In one embodiment, the magnetic element comprises a permanent magnet and the controlling comprises retaining the magnetic fluid in the damper channel with the permanent magnet.

In one embodiment, the damper channel is unsealed.

In one embodiment, the magnetic element comprises at least one electro-magnet and the controlling comprises displacing the magnetic fluid within the damper channel with the electro-magnet.

In one embodiment, the method comprises locating the electro-magnet axially along the damper channel.

In one embodiment, the method comprises locating the electro-magnet towards an end of the channel.

In one embodiment, the magnetic element comprises a plurality of electro-magnets each located at a different axial position along the damper channel.

In one embodiment, the method comprises providing at least one reservoir in fluid communication with the damper channel and configured as a source of the magnetic fluid.

In one embodiment, the method comprises providing a pair of the reservoirs, axially opposed and spaced apart by the damper channel.

In one embodiment, the controlling comprises varying the magnetic field generated by the magnetic element to displace the magnetic fluid to within the damper channel when the rotatable structure transitions between inactivity and a threshold speed.

In one embodiment, the controlling comprises varying the magnetic field generated by the magnetic element to displace the magnetic fluid out of the damper channel when the rotatable structure is at the threshold speed.

In one embodiment, the controlling comprises varying the magnetic field generated by the magnetic element to displace the magnetic fluid to within the damper channel in advance of the rotatable structure transitioning between inactivity and the threshold speed.

In one embodiment, the damper comprises a compact metal or polymer spring damper.

In one embodiment, the damper comprises an axially stiff, radially compliant bearing support spring element.

In one embodiment, the rotatable structure comprises a bearing for a pump.

In one embodiment, the pump comprises a vacuum pump.

In one embodiment, the method comprises providing the rotatable structure and the pump.

In one embodiment, the permanent magnetic comprises a rotor magnet of the pump.

In one embodiment, the magnetic fluid comprises at least one of a ferrofluid and a magnetic room temperature ionic liquid.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figures 1A to 1C illustrate a damper assembly according to one embodiment;
Figures 2A to 2C illustrate a damper assembly according to one embodiment;
Figure 3 illustrates the required magnetic field to retain the fluid in the reservoir and move it up the damping channels;
Figures 4A to 4C illustrate a damper assembly according to one embodiment;
Figure 5 illustrates the theoretical achievable variation in damping using a fluid with viscosity of 400cP; and
Figure 6 illustrates an example operation of the damper assemblies of Figures 2A to 2C and 4A to 4C.

### DESCRIPTION OF THE EMBODIMENTS

Before discussing the embodiments in any more detail, first an overview will be provided. Embodiments provide a damper assembly (which may be formed from metal, a polymer or a combination of the two) in which a magnetic element controls the location or movement of a magnetic fluid (which experiences a force under the influence of a magnetic field) within a damper channel, recess or void. Using the magnetic element to retain the magnetic fluid provides for a simplified configuration which avoids the need for O-rings or other physical seals to prevent the loss of the magnetic fluid. Using the magnetic element to move the magnetic fluid within the damper assembly helps to vary the damping characteristics of the damper assembly actively.

### Passive Damper

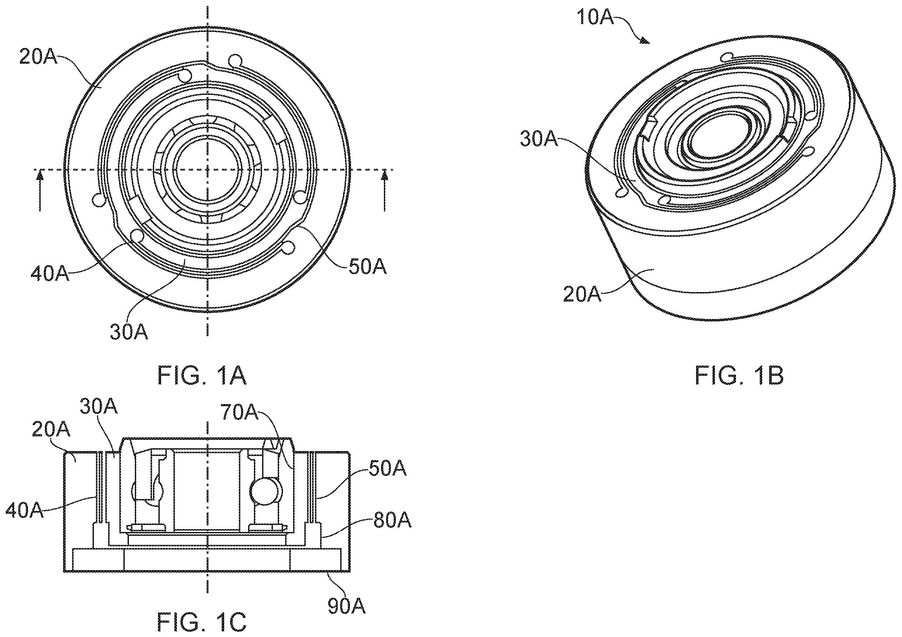

Figures 1A to 1C illustrate a damper assembly, generally 10A, according to one embodiment. The damper assembly 10A comprises an outer annular body 20A, which receives an inner annular body 30A. The inner annular body 30A is concentrically located and co-axially aligned with the outer annular body 20A. The inner annular body 30A is coupled with the outer annular body 20A by way of a series of spring structures 40A which extend radially between the inner annular body 30A and the outer annular body 20A, following a generally circumferential path (similar to that described in EP2064448). The spring structures 40A define a series of damping channels 50A between opposing faces of the spring structures 40A, and the inner annular body 30A and the outer annular body 20A. A radially inner surface of the inner annular body 30 defines a void into which a bearing assembly 60A is received. The bearing assembly defines a through bore 70A into which a rotatable shaft (not shown) is received. A reservoir 80A is defined by a void between the outer annular body 20A and the inner annular body 30A. The reservoir 80A is in fluid communication with each of the damping channels 50A. A ring magnet 90A is provided and is retained within a cylindrical recess on a face of the damper assembly 10A, adjacent one end of the fluid reservoir 80A. A magnetic fluid is provided which fills the reservoir 80A and the damping channels 50A. The magnetic fluid is retained within the fluid reservoir 80A and the damping channels 50A by the magnetic field generated by the ring magnet 90A.

In operation, when a shaft received within the through bore 70A rotates, any vibrations experienced by the bearing 60A are transferred to the inner annular body 30A. Those vibrations are then damped by the magnetic fluid within the damping channels 50A, which reduces the amplitude of the vibrations experienced by the outer annular body 20A.

Although this particular embodiment shows the provision of a reservoir 80A, it will be appreciated that other embodiments may omit this reservoir and instead the damping channel 50A may extend to the ring magnet 90A.

Hence, it can be seen that a suitable magnetic fluid such as a ferrofluid can be introduced into the reservoir 80A and damping channels 50A of the damper assembly 10A and is held in place by the permanent ring magnet 90A. The permanent ring magnet 90A holds the fluid in place. Calculations show that a magnet field of approximately 12mT and a gradient of approximately 2mT/mm will retain the fluid within the damper assembly 10A. In the embodiment shown, this is provided by the permanent ring 90A magnet however it would also be possible through the use of suitable pole pieces to provide this magnetic field using the existing rotor magnets of the pump received within the through bore 70A.

It will be appreciated that this is a passive damper arrangement and does not allow for different levels of damping under different operating conditions. However, this provides a means of retaining the ferrofluid within the damper assembly 10A which overcomes some of the problems associated with existing arrangements. This embodiment removes the need for an O-ring damper, allowing the spring constant and damping to be optimised separately to provide the required performance. The main limitation of this arrangement is the variation of the viscosity of the ferrofluid and hence the level of damping with temperature. For example, for an increase in temperature from 20°C to 70°C, the damping is expected to reduce by a factor of x4.

### Active Damper

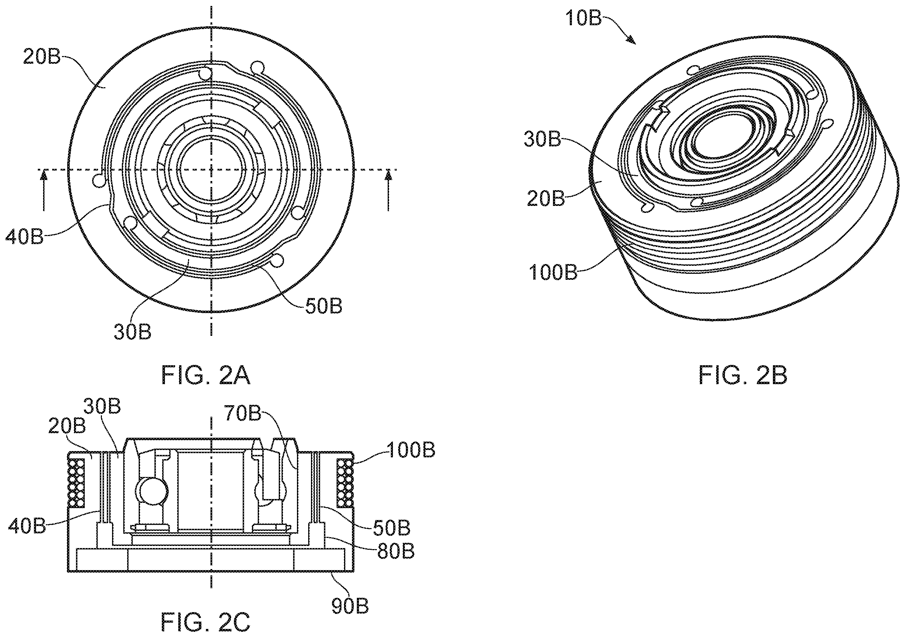

Figures 2A to 2C illustrate a damper assembly, generally 10B, according to one embodiment. This embodiment is similar to that described in Figure 1 above, but has the additional feature of a ring electro-magnet 100B. In this embodiment, when the electro-magnet 100B is not energised, the reservoir 80B is filled with the magnetic fluid and is retained in place by the ring magnet 90B. When additional damping is required, the electro-magnet 100B is energized which causes the magnetic fluid within the reservoir 80B to flow along the damping channels 50B. The number of coils of the electro-magnet 100B which are energized, and/or the degree to which they are energized, will vary which varies the distance that the magnetic fluid travels along the damping channels 50B, which in turn varies the amount of damping between the inner annular body 30B and the outer annular body 20B.

In operation, when a shaft received within the through bore 70B rotates, any vibrations experienced by the bearing 60B are transferred to the inner annular body 30B. Those vibrations are then damped by the magnetic fluid within the damping channels 50B, which reduces the amplitude of the vibrations experienced by the outer annular body 20B, as will be explained in more detail below.

In the quiescent state, the magnetic fluid, such as a ferrofluid is held within the reservoir 80B by the permanent ring magnet 90B rather than by a gasket seal. This removes any reliance on gravity to return the fluid to the reservoir 90B and ensures that the fluid is returned to, and retained within, the reservoir 90B irrespective of the pump orientation. This provides a fast and consistent switching time constant and also removes the need for a mechanical fluid seal.

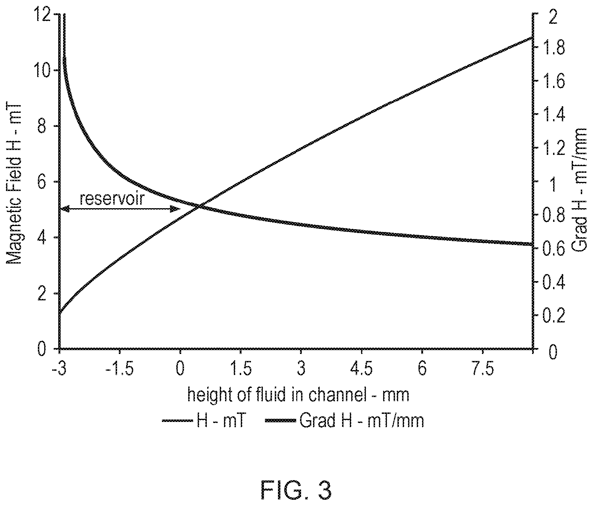

The permanent ring magnet 90B could be a separate item as shown in Figure 2 or may be provided by the pre-existing rotor magnet and motor coil of the pump. The electro-magnet 100B is applied to generate a higher magnetic field than the permanent ring magnet 90B drawing the ferrofluid up into the damping channel 50B. Calculations show that a magnetic field of approximately 5mT is required to retain the fluid in the reservoir 80B against the action of gravity and that the electro-magnet 100B needs to generate a field of approximately 17mT to draw the fluid to the top of the damping channels 50B. The required magnetic field to retain the fluid in the reservoir and move it up the damping channels is shown in Figure 3. These calculations are for a representative ferrofluidwhich has a room temperature viscosity of 400cP and a saturation magnetisation of 40mT.

### Active Damper - Dual Reservoir

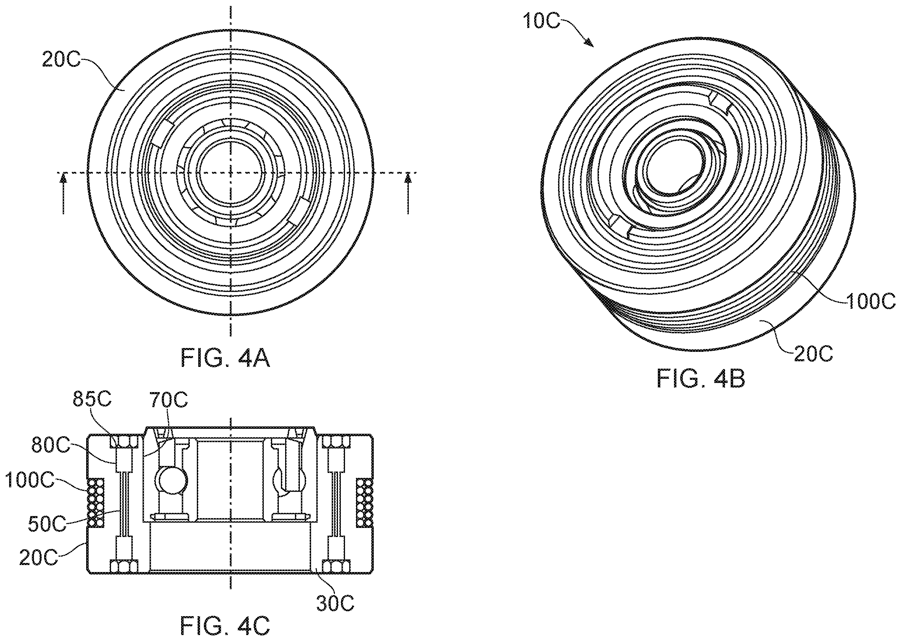

Figures 4A to 4C illustrate a damper assembly, generally 10C, according to one embodiment. This embodiment is similar to the arrangement described in Figure 2 above, but omits the permanent magnet 90B. Instead, the damping channels 50C are enclosed by a pair of reservoirs 80C located at axial ends of the damping channels 50C. The reservoirs 80C are each sealed by a respective seal 85C. This arrangement avoids the need for a permanent magnet and functions identically, irrespective of which orientation the damper assembly 10C is used. In another embodiment, the reservoirs 80C are each sealed by a permanent magnet.

In this embodiment, the magnetic fluid, such as a ferrofluid is held in the damper assembly 10C using a mechanical seal. The use of a mechanical seal will introduce a component of stiffness and damping but if correctly designed this should be negligible. For example, a simple low-stiffness Nitrile or Viton gasket seal of less than 1mm thickness could be used.

In the passive or idle (off) state, the fluid is held within the reservoir 90C and when activated the electro-magnet 100C draws the fluid into the damping channels 50C. In this way, the height of the fluid in the damping channels 50C can be controlled and hence the level of damping can be tuned by varying the current applied to the electro-magnet 100C. The volume of each reservoir 80C is chosen to be approximately equal to the total volume of the damping channels 50C and the use of a reservoir 80C at each end allows the damper assembly 10C to be used in any orientation.

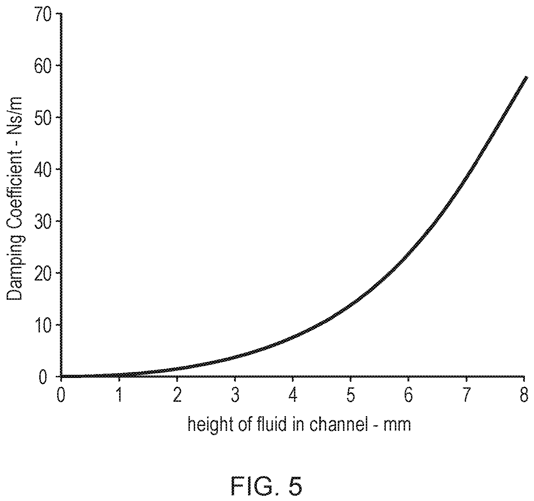

This approach relies upon gravity to return the fluid to the reservoir(s) 80C when switched to the off state. As such, the orientation of the damper assembly 10C may have some impact on the resting location of the fluid and the switching time constant. The theoretical achievable variation in damping using a fluid with viscosity of 400cP in an existing damper assembly is shown in Figure 5 which shows the predicted variation of damping as a function of fluid height in the damper channels.

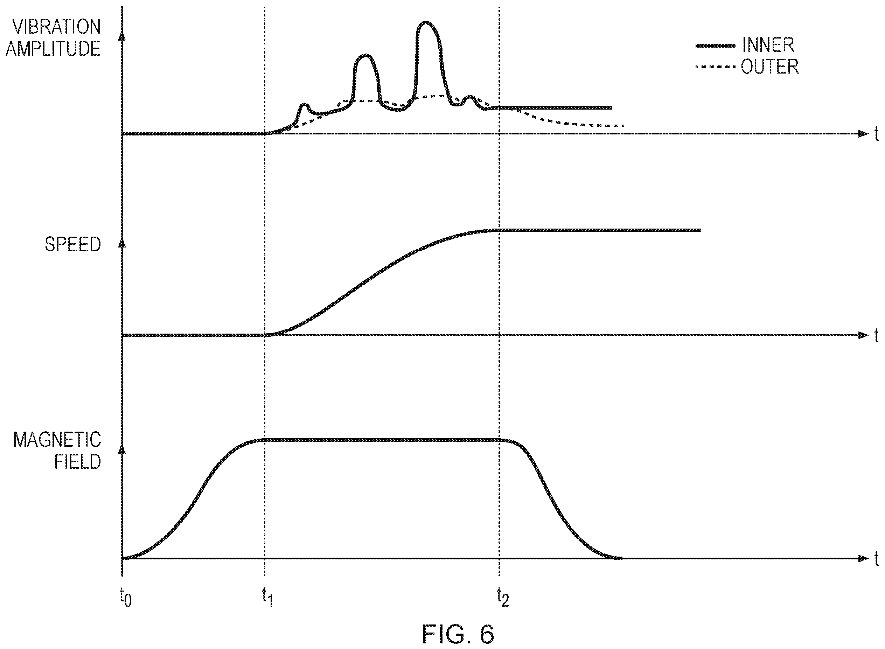

Figure 6 illustrates an example operation of the damper assemblies of Figures 2A to 2C and 4A to 4C. At time t0, an indication is received that the pump received by the damper assembly 10B, 10C is to be switched on. Switch on of the pump is delayed until time t1. Between time t0 and time t1, the electro-magnet 100B, 100C is energised to move the magnetic fluid to within the damper channels 50B, 50C. At time t1, the pump is allowed to increase its speed until it reaches its normal operating speed at time t2. As can be seen, the amplitude of the vibrations experienced by the inner annular body 30B, 30C as the speed transitions through the fundamental frequencies are damped by the magnetic fluid within the damper channels 50B, 50C so that the amplitude of the vibrations experienced by the outer annular body 20B, 20C are reduced. Once the speed of the pump has exceeded a threshold amount at time t2, indicating that the normal operating speed has been achieved, the electro-magnet 100B, 100C is de-energised, allowing the magnetic fluid to return to the reservoir 80B, 80C to reduce coupling between the inner annular body 30B, 30C and the outer annular body 20B, 20C. Should it be desired to change the speed of the pump (either increase or decrease), then the same process can be repeated with the speed change being delayed until the magnetic fluid has been positioned within the damper channels 50B, 50C. Also, the magnitude of the magnetic field applied can be varied based on the required change in speed or as a result of feedback provided relating to the amount of vibration being experienced.

Hence, it can be seen that embodiments provide a damper assembly used in turbomolecular or other pumps which incorporate a magnetic fluid such as a ferrofluid in the channels between the spring arms to provide viscous damping. Embodiments make use of the ability to move and hold the ferrofluid through application of a magnetic field. The simplest embodiment holds the fluid in place by application of a permanent magnetic field. This overcomes problems associated with retaining the fluid within the channels but does not provide a tuneable response. Two further embodiments employ a variable magnetic field to move the ferrofluid fluid from a reservoir into the damping channels of the damper assembly to vary the effective length of the squeeze-film. This provides a significant variation in damping, while retaining the advantage of the long term colloidal stability associated with ferrofluids. One embodiment of tuneable damper relies on mechanical seals to retain the fluid within the envelope of the damper assembly. The second embodiment uses a permanent magnet to hold the fluid in the reservoir removing the need for a mechanical seal. A tuneable damper can be utilised either for transient use during certain operating conditions associated with high vibration or constantly in the form of a fully active damper to minimise vibrations in all states of operation. One approach would be to turn the damper on during start up to increase damping when running through critical frequencies then reduce the damping to a minimum level to provide optimum isolation between the rotor and the housing once full speed has been reached.

Many existing damper designs use an elastomer element to provide the necessary damping to minimise transmission of vibrations to the pump body and reduce resonances at critical frequencies during run-up. The use of an elastomer element introduces an undesired spring effect which is non-linear as a function of the excitation frequency. In addition, the choice of the fixed-level of damping provided by the elastomer element is always a compromise between the requirements for relatively-high damping to ensure that the pump can safely pass through critical speeds and relatively-low damping to minimise transmission of vibrations to the pump envelope at full running speed. An ability to tune the damping to match the requirements at a given rotor speed can therefore offer significant improvement in the transmitted vibration performance of the pump.

One approach is the use of magneto rheological fluids to provide a tuneable level of damping. However, these fluids have poor colloidal stability and exhibit a settling of the fluids out of solution over a period of time. In addition, a mechanical seal is required to contain the fluid. Ferrofluids employ nanometre scale particles and as such offer vastly improved colloidal stability compared to magneto-rheological fluids. Typically, these fluids remain stable for many years without agglomeration or sedimentation. Unfortunately, the viscosity of a ferrofluid can be modified by no more than a factor of 20% to 30% by direct application of a magnetic field. As such these fluids are limited in their usefulness for direct tuneable damping based on a magnetically induced viscosity change. A more useful feature of a ferrofluid is the ability to physical move and hold the fluid through the application of a magnetic field. Embodiments make use of the ability to hold the fluid in the channels of the damping assembly and optionally adjust the location of the fluid to provide a tuneable damping response that does not rely on a magnetically induced change the viscosity of the fluid. In this way, a tuneable damper can be provided whilst retaining the advantage of the high colloidal stability of a ferrofluid.

Accordingly, embodiments use a ferrofluid in a squeeze film damper placed around a bearing in a vacuum pump where the fluid is held in place with the magnetic field from the rotor magnets. Embodiments use a ferrofluid in a squeeze film damper placed around a bearing where the fluid is held within a reservoir then drawn up into the squeeze channels through application of a magnet field to provide an adjustable damping response. Embodiments provide a device where the fluid is held in the reservoir with a permanent magnet and drawn into the channels using an electromagnet. Embodiments provide a device where the permanent magnet is provided by the rotor shaft magnet.

It will be appreciated that embodiment provide a damper for any type of rotating shaft. Although the embodiments described are for use in a vacuum pump (such as a turbo pump), embodiments could be used with many different products where a controllable damping response of the rotor may be desirable.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims and their equivalents.

**REFERENCE SIGNS**

| | |
|---|---|
| damper assembly | 10A-C |
| outer annular body | 20A-C |
| inner annular body | 30A-C |
| spring structures | 40A-C |
| damping channels | 50A-C |
| bearing assembly | 60A |
| through bore | 70A-C |
| reservoir | 80A-C |
| seal | 85C |
| ring magnet | 90A-B |
| electro magnet | 100B-C |

## Claims

1. An apparatus, comprising
a damper (10A-C) having an inner hub (30A-C) for receiving a rotatable structure and a concentric outer mount (20A-C) coupled with said inner hub by at least one spring member (40A-C) which defines at least one damper channel (50A-C);
a magnetic fluid in fluid communication with said damper channel;
a magnetic element (90A-B; 100B-C) operable to control movement of said magnetic fluid within said damper channel;
**characterized in that** the apparatus further comprises control logic operable to vary a magnetic field generated by said magnetic element to displace said magnetic fluid to different positions within said damper channel.

2. The apparatus of claim 1, wherein said magnetic element comprises a permanent magnet operable to retain said magnetic fluid in said damper channel.

3. The apparatus of claim 1 or 2, wherein said damper channel is unsealed.

4. The apparatus of any preceding claim, wherein said magnetic element comprises at least one electro-magnet operable to displace said magnetic fluid within said damper channel.

5. The apparatus of claim 4, wherein said electro-magnet is located axially along said damper channel.

6. The apparatus of claim 4 or 5, wherein said electro-magnet is located is located towards an end of said damper channel.

7. The apparatus of any preceding claim, wherein said magnetic element comprises a plurality of electro-magnets each located at a different axial position along said damper channel.

8. The apparatus of any preceding claim, comprising at least one reservoir (80A-C) in fluid communication with said damper channel and configured as a source of said magnetic fluid, preferably comprising a pair of said reservoirs, axially opposed and spaced apart by said damper channel.

9. The apparatus of any preceding claim, comprising control logic operable to vary said magnetic field generated by said magnetic element to displace said magnetic fluid to within said damper channel when said rotatable structure transitions between inactivity and a threshold speed, preferably wherein said control logic is operable to vary said magnetic field generated by said magnetic element to displace said magnetic fluid out of said damper channel when said rotatable structure exceeds said threshold speed, preferably wherein said control logic is operable to vary said magnetic field generated by said magnetic element to displace said magnetic fluid to within said damper channel in advance of said rotatable structure transitioning between inactivity and said threshold speed.

10. The apparatus of any preceding claim, wherein said rotatable structure comprises a bearing for a pump.

11. The apparatus of claim 10, wherein said pump comprises a vacuum pump.

12. The apparatus of claim 10 or 11, comprising said rotatable structure and said pump.

13. The apparatus of any one of claims 10 to 12, wherein said permanent magnet comprises a rotor magnet of said pump.

14. The apparatus of any preceding claim, wherein said magnetic fluid comprises at least one of a ferrofluid and a magnetic room temperature ionic liquid.

15. A method, comprising
providing a damper (10A-C) having an inner hub (30A-C) for receiving a rotatable structure and a concentric outer mount (20A-C) coupled with said inner hub by at least one spring member (40A-C) which defines at least one damper channel (50A-C);
providing a magnetic fluid in fluid communication with said damper channel;
controlling movement of said magnetic fluid within said damper channel with a magnetic element (90A-B; 100B-C);
**characterized in that** the method further comprises varying a magnetic field generated by the magnetic element to displace the magnetic fluid to different positions within the damper channel.

## Patentansprüche

1. Vorrichtung, umfassend:
einen Dämpfer (10A-C), aufweisend eine innere Nabe (30A-C) zum Aufnehmen einer drehbaren Struktur und eine konzentrische äußere Befestigung (20A-C), durch mindestens ein Federelement (40A-C), das mindestens einen Dämpferkanal (50A-C) definiert, gekoppelt mit der inneren Nabe;
ein magnetisches Fluid in Fluidverbindung mit dem Dämpferkanal;
ein magnetisches Element (90A-B; 100B-C), dazu betreibbar, die Bewegung des magnetischen Fluides in dem Dämpferkanal zu steuern;
**dadurch gekennzeichnet, dass** die Vorrichtung ferner umfasst:
Steuerungslogik, dazu betreibbar, ein durch das magnetische Element erzeugtes Magnetfeld zu variieren, um das magnetische Fluid in unterschiedliche Positionen innerhalb des Dämpferkanals zu verlagern.

2. Vorrichtung nach Anspruch 1, wobei das magnetische Element einen Permanentmagneten, der dazu betreibbar ist, das magnetische Fluid in dem Dämpferkanal zu halten, umfasst.

3. Vorrichtung nach Anspruch 1 oder Anspruch 2, wobei der Dämpferkanal nicht abgedichtet ist.

4. Vorrichtung nach einem der vorhergehenden Ansprüche, wobei das magnetische Element mindestens einen Elektromagneten, der dazu betreibbar ist, das magnetische Fluid innerhalb des Dämpferkanals zu verlagern, umfasst.

5. Vorrichtung nach Anspruch 4, wobei der Elektromagnet axial entlang des Dämpferkanals angeordnet ist.

6. Vorrichtung nach Anspruch 4 oder 5, wobei der Elektromagnet in Richtung eines Endes des Dämpferkanals angeordnet ist.

7. Vorrichtung nach einem der vorhergehenden Ansprüche, wobei das magnetische Element eine Vielzahl von Elektromagneten, die jeweils an einer anderen axialen Position entlang des Dämpferkanals angeordnet sind, umfasst.

8. Vorrichtung nach einem der vorhergehenden Ansprüche, umfassend mindestens einen Behälter (80A-C) in Fluidverbindung mit dem Dämpferkanal und konfiguriert als eine Quelle des magnetischen Fluides, vorzugsweise umfassend ein Paar der Behälter, axial gegenüberliegend und durch den Dämpferkanal beabstandet.

9. Vorrichtung nach einem der vorhergehenden Ansprüche, umfassend Steuerungslogik, dazu betreibbar, das von dem magnetischen Element erzeugte Magnetfeld zu variieren, um das magnetische Fluid nach innerhalb des Dämpferkanals zu verlagern, wenn die drehbare Struktur zwischen Inaktivität und einer Schwellengeschwindigkeit übergeht, wobei die Steuerungslogik vorzugsweise dazu betreibbar ist, das von dem magnetischen Element erzeugte Magnetfeld zu variieren, um das magnetische Fluid aus dem Dämpferkanal zu verlagern, wenn die drehbare Struktur die Schwellengeschwindigkeit überschreitet, wobei die Steuerungslogik vorzugsweise dazu betreibbar ist, das von dem magnetischen Element erzeugte Magnetfeld so zu variieren, dass das magnetische Fluid zum Inneren des Dämpferkanals verlagert wird, bevor die drehbare Struktur zwischen Inaktivität und der Schwellengeschwindigkeit übergeht.

10. Vorrichtung nach einem der vorhergehenden Ansprüche, wobei die drehbare Struktur ein Lager für eine Pumpe umfasst.

11. Vorrichtung nach Anspruch 10, wobei die Pumpe eine Vakuumpumpe umfasst.

12. Vorrichtung nach Anspruch 10 oder 11, umfassend die drehbare Struktur und die Pumpe.

13. Vorrichtung nach einem der Ansprüche 10 bis 12, wobei der Permanentmagnet einen Rotormagneten der Pumpe umfasst.

14. Vorrichtung nach einem der vorhergehenden Ansprüche, wobei das magnetische Fluid ein Ferrofluid und/oder eine magnetische ionische Flüssigkeit mit Raumtemperatur umfasst.

15. Verfahren, umfassend:
Bereitstellen eines Dämpfers (10A-C) mit einer inneren Nabe (30A-C) zum Aufnehmen einer drehbaren Struktur und einer konzentrischen äußeren Befestigung (20A-C), durch mindestens ein Federelement (40A-C), das mindestens einen Dämpferkanal (50A-C) definiert, gekoppelt mit der inneren Nabe;
Bereitstellen eines magnetischen Fluides in Fluidverbindung mit dem Dämpferkanal;
Steuern der Bewegung des magnetischen Fluides mit einem magnetischen Element (90AB; 100B-C) innerhalb des Dämpferkanals;
**dadurch gekennzeichnet, dass** das Verfahren ferner umfasst:
Variieren eines durch das magnetische Element erzeugten Magnetfeldes, um das magnetische Fluid in unterschiedliche Positionen innerhalb des Dämpferkanals zu verlagern.

## Revendications

1. Appareil, comprenant :
un amortisseur (10A-C) ayant un moyeu interne (30A-C) pour recevoir une structure rotative et un support externe concentrique (20A-C) accouplé audit moyeu interne par au moins un élément ressort (40A-C) qui définit au moins un canal d'amortisseur (50A-C) ;
un fluide magnétique en communication fluidique avec ledit canal d'amortisseur ;
un élément magnétique (90A-B ; 100B-C) opérationnel pour commander un mouvement dudit fluide magnétique à l'intérieur dudit canal d'amortisseur ;
**caractérisé en ce que** l'appareil comprend en outre
une logique de commande opérationnelle pour faire varier un champ magnétique généré par ledit élément magnétique pour déplacer ledit fluide magnétique vers des positions différentes à l'intérieur dudit canal d'amortisseur.

2. Appareil selon la revendication 1, dans lequel ledit élément magnétique comprend un aimant permanent opérationnel pour retenir ledit fluide magnétique dans ledit canal d'amortisseur.

3. Appareil selon la revendication 1 ou 2, dans lequel ledit canal d'amortisseur n'est pas scellé.

4. Appareil selon une revendication précédente quelconque, dans lequel ledit élément magnétique comprend au moins un électroaimant opérationnel pour déplacer ledit fluide magnétique à l'intérieur dudit canal d'amortisseur.

5. Appareil selon la revendication 4, dans lequel ledit électroaimant est situé axialement le long dudit canal d'amortisseur.

6. Appareil selon la revendication 4 ou 5, dans lequel ledit électroaimant est situé vers une extrémité dudit canal d'amortisseur.

7. Appareil selon une revendication précédente quelconque, dans lequel ledit élément magnétique comprend une pluralité d'électroaimants, chacun situé dans une position axiale différente le long dudit canal d'amortisseur.

8. Appareil selon une revendication précédente quelconque, comprenant au moins un réservoir (80A-C) en communication fluidique avec ledit canal d'amortisseur et configuré en tant que source dudit fluide magnétique, comprenant de préférence une paire desdits réservoirs, opposés axialement et espacés par ledit canal d'amortisseur.

9. Appareil selon une revendication précédente quelconque, comprenant une logique de commande opérationnelle pour faire varier ledit champ magnétique généré par ledit élément magnétique pour déplacer ledit fluide magnétique jusqu'à l'intérieur dudit canal d'amortisseur lorsque ladite structure rotative effectue une transition entre l'inactivité et une vitesse seuil, de préférence dans lequel ladite logique de commande est opérationnelle pour faire varier ledit champ magnétique généré par ledit élément magnétique pour déplacer ledit fluide magnétique hors dudit canal d'amortisseur lorsque ladite structure rotative dépasse ladite vitesse seuil, de préférence dans lequel ladite logique de commande est opérationnelle pour faire varier ledit champ magnétique généré par ledit élément magnétique pour déplacer ledit fluide magnétique jusqu'à l'intérieur dudit canal d'amortisseur avant que ladite structure rotative effectue une transition entre l'inactivité et ladite vitesse seuil.

10. Appareil selon une revendication précédente quelconque, dans lequel ladite structure rotative comprend un roulement pour une pompe.

11. Appareil selon la revendication 10, dans lequel ladite pompe comprend une pompe à vide.

12. Appareil selon la revendication 10 ou 11, comprenant ladite structure rotative et ladite pompe.

13. Appareil selon l'une quelconque des revendications 10 à 12, dans lequel ledit aimant permanent comprend un aimant de rotor de ladite pompe.

14. Appareil selon une revendication précédente quelconque, dans lequel ledit fluide magnétique comprend au moins l'un d'un ferrofluide et d'un liquide ionique magnétique à température ambiante.

15. Procédé, comprenant
la fourniture d'un amortisseur (10A-C) ayant un moyeu interne (30A-C) pour recevoir une structure rotative et un support externe concentrique (20A-C) accouplé audit moyeu interne par au moins un élément ressort (40A-C) qui définit au moins un canal d'amortisseur (50A-C) ;
la fourniture d'un fluide magnétique en communication fluidique avec ledit canal d'amortisseur ;
la commande du mouvement dudit fluide magnétique à l'intérieur dudit canal d'amortisseur avec un élément magnétique (90A-B ; 100B-C) ;
**caractérisé en ce que** le procédé comprend en outre
la variation d'un champ magnétique généré par l'élément magnétique pour déplacer le fluide magnétique vers différentes positions à l'intérieur du canal d'amortisseur.
